# EUROPEAN PATENT APPLICATION

(11) **EP 1 524 747 A1**
(43) Date of publication of application: **20.04.2005**
(21) Application number: 04024682.9
(22) Date of filing: 15.10.2004
(51) Int. Cl.: H02G 9/12

(54) **A method and device for lowering a cable into water**

(30) Priority: 17.10.2003 NO 20034673
(71) Applicant: Arwidsson, Lars Ingemar, 426 69 Västra Frölunda (SE)
(72) Inventor: Arwidsson, Lars, 426 69 Västra Frölunda (SE); Widing, Ole, 1929 Auli (NO)
(74) Representative: Axelsson, Nils Ake

(57) **Abstract**

The invention relates to a method for laying cable under water. The method is implemented by at least one empty pipe, i.e. for example filled with air, another gas or the like, being placed on or near the surface of the water, the cable is inserted in at least one pipe on the surface of the water, and the pipe with the cable is lowered to the bottom. The invention also relates to a device for laying cable under water comprising at least one pipe which is adapted for insertion of a cable and where, when empty, the pipe has neutral or positive buoyancy in water.

## Description

The invention relates to a method and device for lowering a cable into water. In more specific terms the invention relates to a method for laying cables in pipes that are to be located on the bottom of, for example, a fjord, lake or stretch of open sea.

The increased use of data communication in recent years has led to an increased need for bandwidth on data transmission lines. Everyone is now required to have access to high-speed data transmission and for this purpose transmission cables with a wide bandwidth, particularly fibre-optic cables have been adopted.

Cables of this kind are usually laid on dry land by pulling the cable through a pipe which has already been placed in or on the ground. This type of cable pulling can be conducted in many ways, but the most common and efficient method is by using air or water as an aid for pulling the cable through the pipe. An example of insertion of cable in a pipe is illustrated in US 6 402 123. In this publication the cable is inserted in the pipe by means of a combination of the flow of a pressurised liquid and a flow of a pressurised gas.

In a country like Norway many geographical obstacles are encountered when laying cable between densely populated areas and other areas. The many long fjords in particular represent a challenge. The fjords may be many hundreds of metres deep and therefore conventional equipment cannot be employed. At present a special seabed cable is used in water. This cable is deployed by means of large cable boats with large coils of cable on board where cable is paid out behind the boat as the boat travels along. An example of a fibre-optic cable intended for deployment under water is disclosed in GB 2 165 961. These are complicated and expensive cables, and the method of deployment used for such cables is time-consuming, expensive and entails a relatively great risk of errors arising during deployment. For this reason cable is often laid around fjords in order to avoid having to lay underwater cable across the fjord.

The object of the invention is to provide a method for lowering a cable into water that solves the problems in the prior art.

The object of the invention is achieved by means of the features in the patent claims.

In principle the method according to the invention is implemented by placing at least one empty pipe, i.e., for example, filled with air, another gas or the like, on or near the surface of the water, the cable is inserted in at least one pipe on the surface of the water and the pipe with the cable is lowered to the bottom.

The method employed for inserting the cable in the pipe/pipes may be a known per se method, for example by means of pressurised air, gas or water. For example, the methods described above which are normally used for inserting cable in pipes on land may be employed.

The cable which is to be laid under water may be a fibre-optic cable or a type of electric cable (coaxial cable, ordinary copper wire, etc.) for various purposes such as, for example, signal transmission, data transmission, or the like.

The cable may be a standard cable of the same type as that used on land, or it may be specially adapted for use under water. The cable type employed will depend on the specifications of the pipe into which the cable is to be inserted. In a preferred embodiment a cable is employed which is adapted to withstand a pressure corresponding to the water pressure at the depth at which the cable is to be located. Typical depths in Norwegian fjords are 400m to 900m, but this will vary from place to place. In order for the cable to be capable of withstanding this pressure, it may, for example, be equipped with a protective sleeve, stocking or the like of metal or another strong and rigid material. It may be advantageous to employ a waterproof protective sleeve in order to protect the cable's interior against the environment. In an embodiment the cable is designed to have an average density close to the density of the water, preferably slightly greater so that the cable has a tendency to sink rather than float.

The pipe or pipes into which the cable is to be inserted may be of different designs depending on the area of application and the cable insertion method. The simplest form of pipe can be employed when the cable is inserted in the pipe by means of water and the water remains inside the pipe when pipe and cable are lowered. By this means the pipe is exposed to less pressure load since the water inside the pipe compensates for the pressure outside the pipe and the pipe does not have to be designed to withstand great pressure. A suitable material for the pipes is acid-proof plastic since it is light, robust and corrosion-resistant.

Depending on the use, one or more pipes with cable may be employed. When several pipes are used, they may either be joined together or laid separately. It is also possible to lay extra pipes without cable for future cable insertion, for example when there is an increased need for bandwidth with fibre-optic data transmission cables. The pipes can be joined together by means of strips, clamp mechanisms, gluing, point welding, soldering or by other suitable means.

The pipes are adapted to float on water or immediately below the surface of the water when they are empty, which in practice means filled with air, but they may also be filled with another gas or liquid of suitable density. The weight of the pipes can be adapted by means of choice of material or by providing extra weights in the form of, for example, metal wire wound round the pipes, weights attached to the pipes, etc.

When implementing the method according to the invention, the empty pipes are first placed on or near the surface of the water. This is done, for example, by the pipes being coiled up on a drum located on land at the water's edge and pulled out on to the surface of the water by means of a boat. Alternatively, the drum may be located on the pipe deployment boat. Since the pipes are adapted to float on the water when they are empty/filled with air, the pipes will remain lying on the surface of the water or partly submerged in the water. In this way the pipes remain in a horizontal position, thus simplifying the insertion of cable and helping to enable the cable to be inserted in long stretches of pipe at a time compared, for example to on land where pipes have to be laid over hilltops and mountain ridges. When laying a plurality of pipes, several pipes may either be joined together on the same drum, they may be deployed separately or the pipes may be joined together on the way out into the water. They can be joined manually or automatically by means of a joining mechanism.

In an embodiment of the method a pipe is deployed on or near the surface of the water. When the pipe has been deployed, cable is inserted in the pipe in a known per se manner. In a known method the cable is inserted in the pipe by means of water under pressure. The pressure pushes the water through the pipe, and the movement of the water floats the cable through the pipe. The front end of the cable is often attached to a pilot which helps the water to "pull" the cable through the pipe and which has a signal transmitter that makes it possible to detect from the outside where the front end of the cable is located at any time. It is also possible to pass the cable through the pipe without a pilot.

As the pipe is filled with water and cable, the total mass density of the pipe installation consisting of cable, water and pipe becomes so great that the pipe installation begins to sink. In this fashion the pipe installation gradually sinks as the cable is inserted in the pipe and when the cable reaches the end point of the pipe, the pipe installation will be completely submerged in the water. If the cable is inserted in the pipe without the use of water, for example by means of compressed air, the pipe will be able to remain floating even after insertion of the cable. This is achieved, for example, by choosing a cable density that is close to the density of the water. In this case the pipe can be filled with water after the insertion of the cable is completed, whereupon the pipe sinks in the same manner as described above.

Alternatively, the pipe with cable may be lowered by means of weights that are attached to or placed over the pipe.

In a second embodiment of the method according to the invention, two pipes, a first pipe and a second pipe, are deployed on the surface of the water. The pipes are interconnected before, during or after deployment. The pipes may be of the same type, or the second pipe may be a pipe of a less expensive type that is only used as a buoyancy element.

When the two pipes have been placed in position on or near the surface of the water, cable is inserted in the first pipe, for example by means of water as described above. When the cable is passed through the pipe to the end point, the pipes will still be located on or near the surface of the water since they are held up by at least the second pipe which has not received cable or water. At this stage there are two choices:
1) to submerge both pipes in the water or
2) to separate the two pipes from each other so that only the first pipe sinks.

In case 1) the pipes are submerged, for example, by filling both or the second pipe with water with the result that the total mass density of the pipe installation consisting of pipe, cable and water becomes so high that the pipe installation sinks.

In case 2) the two pipes are separated from each other by, for example, cutting strips, opening clamps or in some other way breaking the connection between the pipes. If the cable was inserted in the first pipe by means of water, this pipe will already have sufficient negative buoyancy to allow it to sink when it is released from the second pipe. Alternatively, the first pipe is filled with water before, after or while it is separated from the second pipe, or other means are employed to achieve the sinking of the pipe. The second pipe can then be picked up again for later use.

In a further embodiment, only one pipe is deployed which is connected to buoyancy elements. The buoyancy elements are separated from the pipe at the same time as or after the cable is passed through the pipe, thus enabling sinking of the pipe to be achieved.

The invention will now be described in greater detail by means of examples with reference to the accompanying figures.

Figures 1a-c illustrate an introductory stage in the method according to the invention in three different embodiments.

Figures 2a and 2b illustrate the embodiment in figure 1a for the method according to the invention.

Figures 3a and 3b illustrate the embodiment in figure 1b for the method according to the invention.

Figures 4a and 4b illustrate the embodiment in figure 1c for the method according to the invention.

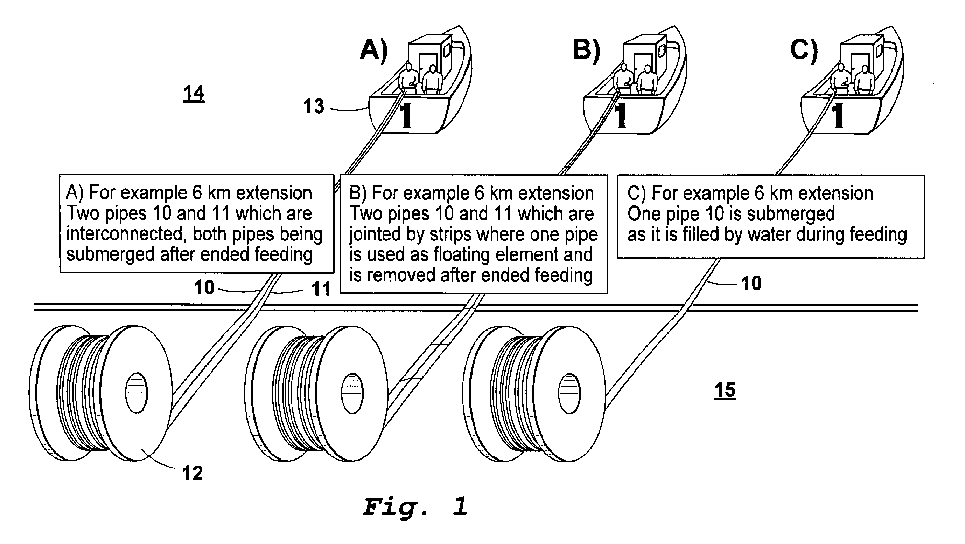

Figures 1a-c illustrate an introductory stage in the method according to the invention in three different embodiments. Figure 1a illustrates deployment of a first pipe 10 and a second pipe 11 which are interconnected. The pipes are deployed by being pulled out from a drum 12 located on land 15 by means of a boat 13 on the water 14. Figure 1b illustrates approximately the same situation as in figure 1a, but here the pipes are joined together by means of "strips" in order at a later stage to be able to easily separate the pipes from each other. In figure 1c only one pipe 10 is deployed in the same way as for the two pipes in figures 1a and 1b.

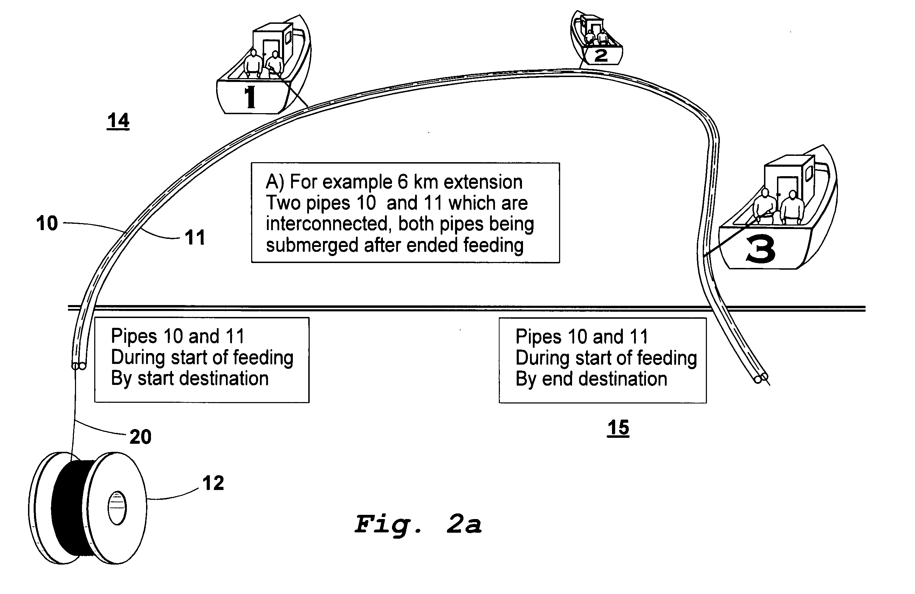

In the illustration in figure 2a the two pipes have been deployed (as shownin figure 1a) and are floating on the surface of the water. When the pipes are deployed they are empty. Cable 20 from a cable drum 21 is inserted in the first pipe 10 by means of a known per se method. In this example we assume that the cable insertion is performed by means of water under pressure which is pushed through the pipe while at the same time the cable is passed through the pipe.

Tenders 1, 2 and 3, or possibly the same vessel in three positions, watch to ensure that the pipe is located in the correct position and possibly that the progress of the cable 20 in the pipe is following the desired path. When cable and water are inserted in the pipe 10, it will begin to sink, but is held up by the pipe 11 which is filled with air. In this way both the pipes 10 and 11 are kept at the surface until the cable has been passed to the pipe's end point.

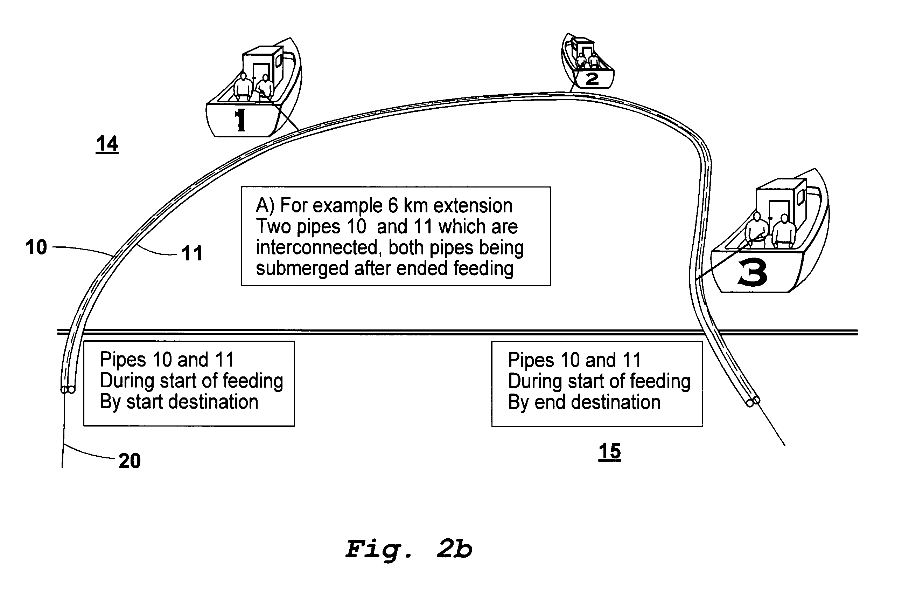

In figure 2b the insertion of cable 20 and water in the pipe has been successfully completed, and the pipes are now ready to be submerged. This is accomplished by filling the second pipe 11 with water. As the pipe 11 is filled with water, it will begin to sink, and both the pipes 10 and 11 are therefore lowered in a controlled manner.

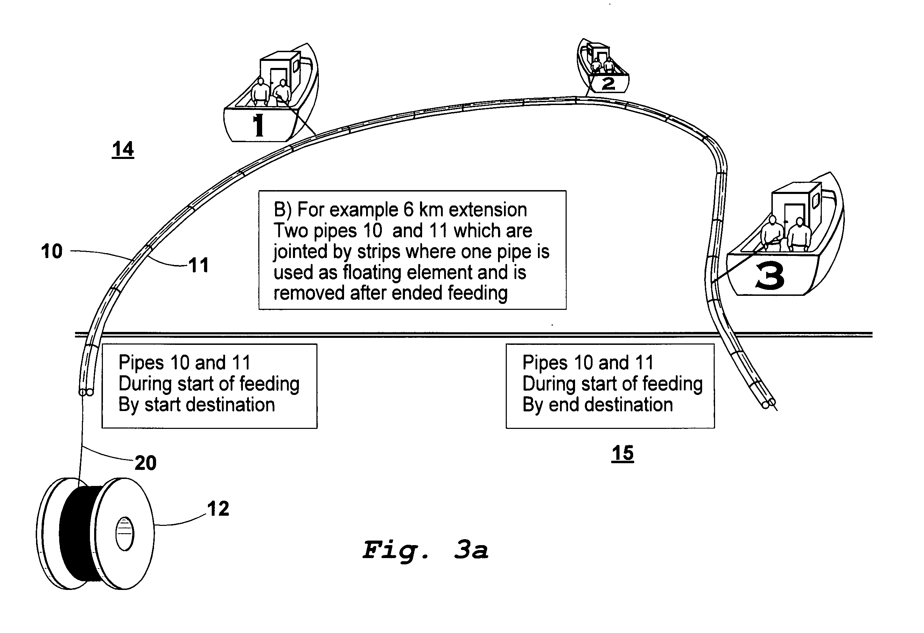

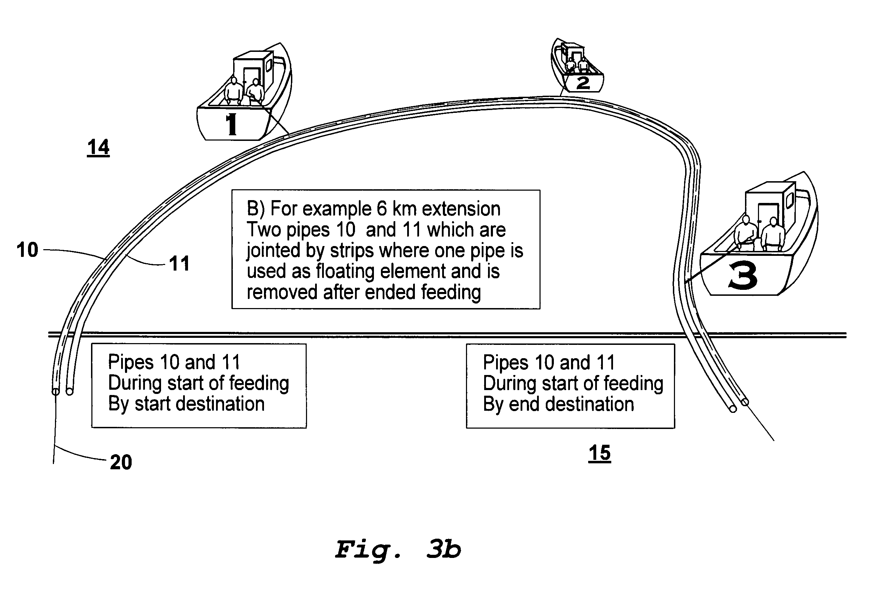

Figure 3a illustrates a similar situation to that in figure 2a with the difference that in this case the pipes 10 and 11 are joined together by "strips". The pipe 11 also acts here as a buoyancy element that holds the pipe 10 up when it is filled with water and cable 20.

After the cable 20 has been passed to the end point of the pipe 10, pipe 10 is separated from pipe 11 by the strips being loosened or cut. On separation of the two pipes, the pipe 10, which is filled with water and cable, will begin to sink, while the pipe 11 will still float on the surface and can be coiled up again for later use.

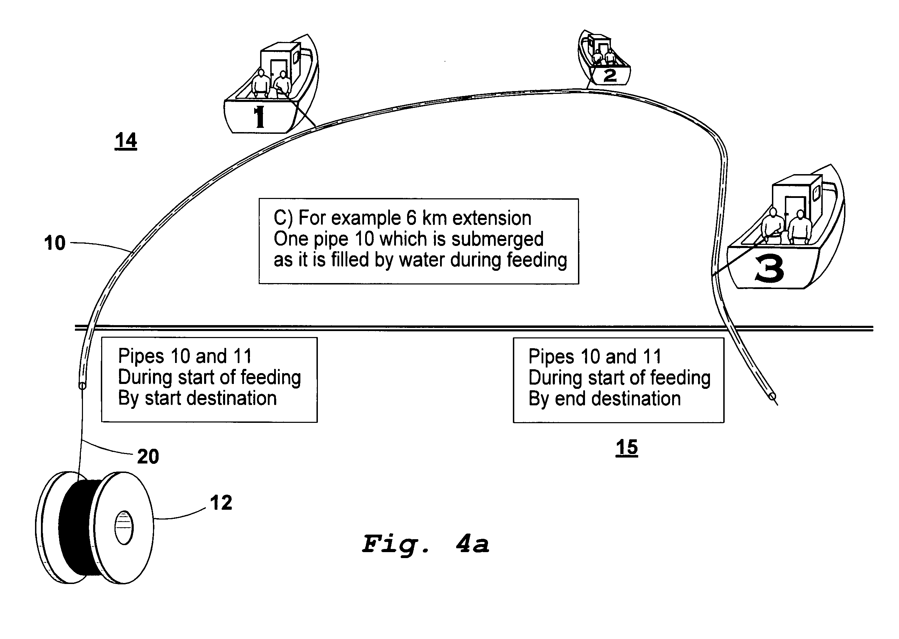

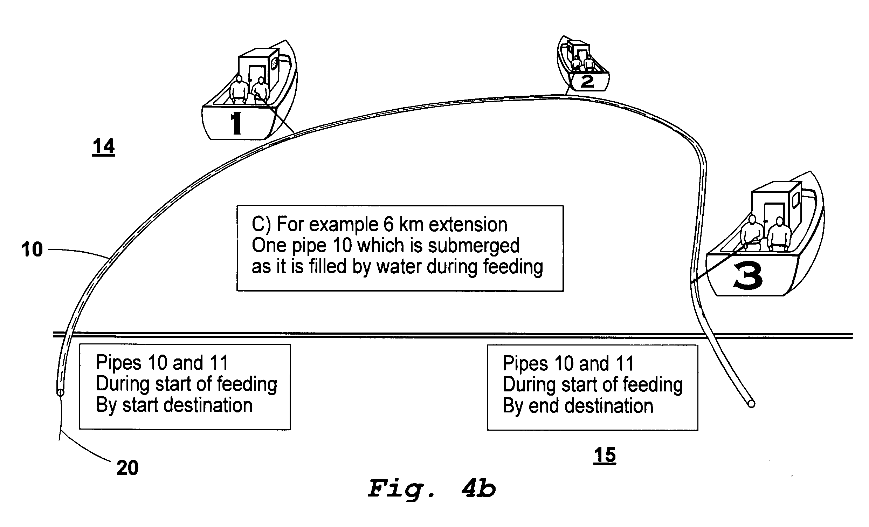

Figure 4a illustrates an embodiment where only one pipe 10 is employed. When the cable 20 is inserted in the pipe 10 by filling it with water, the pipe will begin to sink as illustrated in figure 4b. The lowering of the pipe will take place in step with the feeding in of the cable 20 and when the cable 20 reaches the end point, the pipe with cable will be completely submerged in the water.

## Claims

1. A method for laying cable under water,
**characterised in that** at least one empty pipe is placed on or near the surface of the water, the cable is inserted in the pipe and the pipe with cable are lowered to the bottom after or while the cable is inserted in the pipe.

2. A method according to claim 1,
**characterised in that** the cable is inserted in the pipe by means of a fluid.

3. A method according to claim 2,
**characterised in that** the fluid is air and the pipe with cable is lowered after the cable has been inserted in the pipe.

4. A method according to claim 2,
**characterised in that** the fluid is water and the pipe with cable is lowered while the cable is inserted in the pipe.

5. A method according to one of the claims 1-4,
**characterised in that** the pipe is connected to a buoyancy element and the pipe with cable is lowered to the bottom after the cable has been inserted.

6. A method according to claim 5,
**characterised in that** the buoyancy element is releasably connected to the pipe and that the connection between the buoyancy element and the pipe is released before the pipe with cable is lowered.

7. A method according to claim 5,
**characterised in that** the buoyancy element is filled with water in order to lower the buoyancy element and the pipe with cable.

8. A device for laying cable under water comprising at least one pipe which is adapted for insertion of a cable,
**characterised in that** when it is empty the pipe has neutral or positive buoyancy in water.

9. A device according to claim 8,
**characterised in that** when the cable has been inserted in the pipe, the total buoyancy is negative, thus causing the pipe with the cable to sink to the bottom.

10. A device according to claim 8,
**characterised in that** when the cable has been inserted in the pipe by means of water, the total buoyancy is negative, thus causing the pipe with water and cable to sink to the bottom.

11. A device for laying cable under water comprising at least one pipe which is adapted for insertion of a cable,
**characterised in that** it comprises at least one buoyancy element connected to the pipe, where the buoyancy element has sufficient buoyancy to keep the pipe with cable floating.

12. A device according to claim 11,
**characterised in that** the buoyancy element is releasably connected to the pipe.

13. A device according to claim 12,
**characterised in that** when the cable has been inserted in the pipe, the total buoyancy of the pipe is negative with the result that when the pipe is released from the buoyancy element, the pipe with the cable sinks to the bottom.

14. A device according to claim 11,
**characterised in that** the buoyancy element is a pipe which when empty has sufficient buoyancy to keep the pipe with cable floating, and when filled with water it gives a total buoyancy for pipe, cable and buoyancy element that is negative.
